# EUROPEAN PATENT SPECIFICATION

(11) **EP 3 317 862 B1**
(45) Date of publication and mention of the grant of the patent: **23.03.2022**
(21) Application number: 16732543.0
(22) Date of filing: 14.06.2016
(51) Int. Cl.: G07D 7/00, G09F 3/00, G09F 3/10, G09F 3/02

(54) **POSTAGE STAMPS**
BRIEFMARKEN
TIMBRES D'AFFRANCHISSEMENT

(30) Priority: 01.07.2015 EP 15174794
(43) Date of publication of application: 09.05.2018
(73) Proprietor: SICPA HOLDING SA, 1008 Prilly (CH)
(72) Inventor: FRYER, Andrew, Farnham Common Buckinghamshire SL2 3NX (GB); WOOD, Richard, Lewis, Frinton-on-Sea Essex CO13 9NU (GB)
(74) Representative: Hepp Wenger Ryffel AG
(86) International application number: PCT/EP2016/063627
(87) International publication number: WO 2017/001188

(56) References cited:
- WO-A1-90/01764
- WO-A1-2014/124718
- WO-A2-02/063595
- WO-A2-2008/019365
- CN-U- 202 217 447

## Description

The present invention relates to the field of cold transfer postage stamps for mail pieces, methods for manufacturing said postage stamps and uses thereof.

### BACKGROUND OF THE INVENTION

Postage stamps have historically been produced with the purpose of proving that a certain fee has been paid to post a mail piece such as for example an envelope, a parcel or a package for delivery. Postage stamps are typically water-activated stamps or self-adhesive postage stamps.

With the aim of protecting postage stamps against counterfeiting and/or illegal reproduction, security printers and postal authorities have developed postal stamps comprising security features. In particular, one or more security elements such as for example luminescent compounds containing inks are applied during the printing process of postage stamps so as to ensure that, after having been applied to a mail, said security elements may be detected by a machine as an anti-counterfeited action. Moreover, luminescent security elements may also be used for sorting postage stamps as a function of their value including first-class mailings and standard mailings. US 2014/0241569 discloses a method for the automatic verification of the authenticity of a postage indicium that has a value indication and that has a luminescent area.

With the aim of cancelling postage stamps affixed to mail pieces and ensuring that those stamps are not re-used, a marking is applied by, or on behalf of, a post services provider. Accordingly, postage stamp cancellation is the application of a marking on said stamp to deface and prevent it from a re-use. Cancellation marks may be handstamps or may be applied by stamp cancellation machines. However, postal authorities or companies suffer from a loss of revenue due to a proportion of mail pieces not having a cancellation mark covering the postage stamp during the franking process.

Non-cancelling allows postage stamps that erroneously lack a cancellation mark to be re-used when removed from the mail piece and thus leads to loss of revenue.

With the aim of overcoming this issue, fugitive inks have been proposed to be used on postage stamps, wherein said inks exhibit an evidence of tampering when a soaking solution is used to remove said stamps from a mail piece. However, since fugitive inks typically bleed under certain conditions, there might be a potential issue with the postage stamp becoming damaged whilst in circulation through absorption of moisture or accidental spillage of liquids or solvents.

Alternative methods to overcome the re-use of postage stamps that erroneously lack a cancellation mark consist of incorporating a tagging layer in the structure of the postage stamp for detecting that the stamp is either a genuine first use stamp or a re-used stamp.

WO 2007/065212 A1 discloses postage stamps comprising a combined adhesive and tagging layer, a stamp image carrier layer and a stamp image layer, wherein the stamp image carrier layer is separable from the stamp after the stamp is applied to a mail piece. Subsequently to the removal of the stamp carrier layer from the mail piece and its application to another mail piece, the illegal re-use may detected by the absence of a tagging layer.

WO 2002/063595 A2 discloses tamper evident postage stamps based on laminates comprising a permanent transparent or translucent stamp paper, a release layer, security indicia and an adhesive layer. The tamper evidence system disclosed in WO 2002/063595 A2 relies in the destruction of the laminate if it is removed from a mail piece, said evidence being performed by inspecting the postage stamp and noticing that the security indicia have been damaged in the case of an illegal re-use of said stamp. Due to the presence of the permanent transparent or translucent stamp paper, a conventional or standard cancellation ink that is used during the franking process may not adhere to the postage stamp disclosed in WO 2002/063595 A2 thus leading to postage stamps erroneously lacking a cancellation mark.

There remains a need for postage stamps that can be cancelled by conventional or standard cancelling inks and that cannot be removed from a mail piece without being destroyed thus preventing the misuse of a postage stamp that erroneously lacks a cancellation mark.

### SUMMARY

Accordingly, it is an object of the present invention to overcome the deficiencies of the prior art discussed above. This is achieved by the provision of cold transfer postage stamps according to claim 1, comprising a) a first release coated substrate, b) one or more printed layers formed by a printing process with one or more security inks and comprising one or more security features, which faces the environment after removal of the first release coated substrate (a), c) a white opaque printed layer formed from a white ink, d) a pressure sensitive adhesive layer, and d) a second release coated substrate.

The cold transfer postage stamps described herein may further comprise one or more printed colored layers.

Described herein are processes, as defined in claim 7, for producing the cold transfer postage stamps described herein and cold transfer postage stamps obtained thereof, said processes comprising the steps of:
i) providing a first release coated substrate,
ii) applying by a printing process one or more security inks so as to form one or more printed layers comprising one or more security features,
iii) applying by a printing process a white ink so as to form a white opaque layer,
iv) applying by a printing or a coating process a pressure sensitive adhesive layer, and
v) applying a second release coated substrate.

The process described herein may further comprise a step of applying by a printing process one or more colored inks so as to form one or more printed colored layers, said step being carried out before step ii), after step ii) or simultaneously with step ii).

Described herein are uses of the cold transfer postage stamps described herein for a mail piece for preventing the misuse of a postage stamp erroneously lacking a cancellation mark.

Described herein are methods, as defined in claim 10, for preventing re-use of a postage stamp erroneously lacking a cancellation mark, said method comprising a step of a) removing the second release coated substrate of the cold transfer postage stamp described herein, b) applying at room temperature the cold transfer postage stamp to a mail piece and c) removing the first release coated substrate from the cold transfer postage stamp.

Described herein are mail pieces comprising a postage stamp comprising a pressure sensitive adhesive layer such as those described herein, a white opaque printed layer such as those described herein, one or more printed layers comprising one or more security inks such as those described herein and optional printed colored layer(s) such as those described herein, wherein said mail pieces are produced by carrying out a cold transfer process at room temperature. The cold transfer process consists of a) removing the second release coated substrate of the cold transfer postage stamp described herein, b) applying at room temperature the cold transfer postage stamp to a mail piece and c) removing the first release substrate from the cold transfer postage stamp.

The cold transfer postage stamps described herein advantageously have one or more printed layers comprising one or more security features and may be applied or deposited on a mail piece without requiring the presence of a permanent substrate. Furthermore, the cold transfer postage stamps described herein do not allow a misuse or abuse of reusing them since they would be destroyed if illegally or fraudulently removed by either a chemical or physical action from the mail piece. Advantageously, the one or more security features, in particular indicia made of one or more security inks comprising one or more luminescent materials may be easily used for the automatic sorting of the cold transfer postage stamps described herein. Automatic sorting is typically carried out with a machine of a post office.

### BRIEF DESCRIPTION OF DRAWINGS

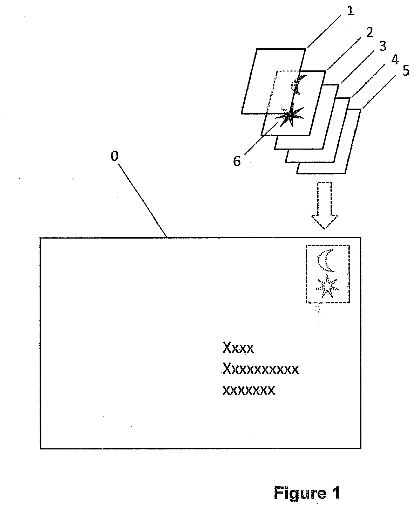

- Fig. 1: schematically depicts a cold transfer postage stamp suitable to be applied on a mail piece.

### DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the terms "about" means that the amount or value in question may be the value designated or some other value about the same. The phrases are intended to convey that similar values within a range of ±5% of the indicated value promote equivalent results or effects according to the invention.

As used herein, the term "and/or" or "or/and" means that either all or only one of the elements of said group may be present. For example, "A and/or B" shall mean "only A, or only B, or both A and B".

As used herein, the term "at least" is meant to define one or more than one, for example one or two or three.

The term "ink" refers to any composition which is capable of forming upon a hardening process a solid coating on a surface and which can be applied by a printing method.

The term "security feature" is used to denote an image, pattern or graphic element that can be used for authentication purposes.

The present invention provides a cold transfer postage stamp suitable to be applied on a mail piece, wherein said cold transfer postage stamp comprises a) a first release coated substrate, preferably a first release coated substrate, b) one or more printed layers formed by a printing process with one or more security inks and comprising one or more printed security features. which faces the environment after removal of the first release coated substrate (a), c) a white opaque printed layer formed from a white ink, d) a pressure sensitive adhesive layer, and e) a second release coated substrate, preferably a second release coated substrate. The cold transfer postage stamp described herein may further comprise a layer made of one or more colored inks. By "cold transfer postage stamp", it is meant a postage stamp that can be applied on a mail piece without the need of heat, i.e. said postage stamp can be applied at room temperature (typical range is about 15 to 35°C) by applying pressure, either with a user's finger or a pressure application tool, device of equipment through the side of the first release coated substrate described herein.

Typical examples of mail pieces include without limitation envelopes, parcels, and packages.

With the aim of protecting the cold transfer postage stamp described herein against counterfeiting and/or illegal reproduction, the cold transfer postage stamp comprises one or more printed layers comprising one or more security features.

Security features can generally be classified into "covert" security features and "overt" security features. The protection provided by "covert" security features relies on the concept that such features require specialized equipment and knowledge for detection, whereas "overt" security features rely on the concept of being detectable with the unaided human senses, e.g. such features may be visible and/or detectable via the tactile senses. Covert security features for protecting the cold transfer postage stamp described herein may be advantageously used so as to allow an automatic verification of the authenticity or genuineness of said stamp by a sorting machine.

The one or more security features described herein are preferably selected from the group consisting of intaglio printed patterns, indicia made of one or more security inks and combinations thereof. Indicia include without limitation symbols, motifs, letters, words, numbers, logos and drawings.

Intaglio printed patterns are known to be the most consistent and high quality printing of fine lines. Intaglio printing (also referred in the art as engraved copper plate printing and engraved steel die printing process) is a technology of choice for generating fine designs in the field of security documents, in particular banknotes and stamps. One of the distinguishing features of the intaglio printing process is that intaglio reliefs may be varied from a few micrometers to several tens of micrometers by using correspondingly shallow or respectively deep recesses of the intaglio printing plate. Intaglio relief resulting from the intaglio ink layer thickness is emphasized by the embossing of the substrate, said embossing being produced by the pressure during the ink transfer. The tactility resulting from intaglio printing gives the printed articles their typical and recognizable touch feeling. The intaglio printed patterns may be made of one or more non-security inks or may be made of one or more security inks such as those described herein, i.e. the intaglio printed patterns described herein may comprise one or more security materials selected from the group consisting of optically variable materials, luminescent materials, magnetic materials, IR absorbing materials and combinations thereof such as those described herein.

The one or more security inks described herein preferably comprise one or more security materials selected from the group consisting of optically variable materials, luminescent materials, magnetic materials, IR absorbing materials and combinations thereof.

Optically variable materials and elements are known in the field of security printing. Optically variable security elements (also referred in the art as goniochromatic security elements or colorshifting security elements) exhibit a viewing-angle or incidence-angle dependent color, and are used to protect security articles against counterfeiting and/or illegal reproduction by commonly available color scanning, printing and copying office equipment. The optically variable characteristic impart a different color impression at different viewing angles By "different color impression", it is meant that the element exhibits a difference of at least one parameter of the CIELAB (1976) system, preferably exhibits a different "a*" value, a different "L*" value or a different "b*" value or exhibits two or three different values chosen among "a*", "b*" and "L*"values at different viewing angles.

According to one embodiment, the optically variable materials described herein are selected from the group consisting of thin film interference pigments, interference coated pigments, cholesteric liquid crystal pigments and mixtures thereof. Preferably, the one or more security inks described herein comprise from about 5 wt-% to about 40 wt-% of the optically variable materials described herein, the weight percents being based on the total weight of the security ink. According to another embodiment, the optically variable materials described herein are optically variable magnetic or magnetizable materials preferably selected from the group consisting of magnetic thin film interference pigments, magnetic cholesteric liquid crystal pigments and mixtures thereof. Thus, the magnetic properties of the optically variable magnetic or magnetizable pigment particles may simultaneously be used as a covert security feature in an authentication process.

Suitable thin-film interference pigments exhibiting optically variable characteristics are known to those skilled in the art and disclosed in US 4,705,300; US 4,705,356; US 4,721,271; US 5,084,351; US 5,214,530; US 5,281,480; US 5,383,995; US 5,569,535, US 5,571624 and in the documents related to these. Preferably, the thin film interference pigments comprise a Fabry-Perot reflector/dielectric/absorber multilayer structure and more preferably a Fabry-Perot absorber/dielectric/reflector/dielectric/ absorber multilayer structure, wherein the absorber layers are partially transmitting and partially reflecting, the dielectric layers are transmitting and the reflective layer is reflecting the incoming light. Preferably, the reflector layer is made from one or more materials selected from the group consisting of metals, metal alloys and combinations thereof, preferably selected from the group consisting of reflective metals, reflective metal alloys and combinations thereof and more preferably selected from the group consisting of aluminum (Al), chromium (Cr), nickel (Ni), and mixtures thereof and still more preferably aluminum (Al). Preferably, the dielectric layers are independently made of one or more materials selected from the group consisting of magnesium fluoride (MgF₂), silicium dioxide (SiO₂) and mixtures thereof and more preferably magnesium fluoride (MgF₂). Preferably, the absorber layers are independently made of one or more materials selected from the group consisting of chromium (Cr), nickel (Ni), metallic alloys and mixtures thereof and more preferably chromium (Cr). When at least a part of the optically variable pigment particles is constituted by thin film interference pigments, it is particularly preferred that the thin film interference pigments comprise a Fabry-Perot absorber/dielectric/reflector/dielectric/absorber multilayer structure consisting of a Cr/MgF₂/Al/MgF₂/Cr multilayer structure.

Magnetic thin film interference pigment particles are known to those skilled in the art and are disclosed e.g. in US 4,838,648; WO 2002/073250 A2; EP 0 686 675 B1; WO 2003/000801 A2; US 6,838,166; WO 2007/131833 A1; EP 2 402 401 A1 and in the documents cited therein. Preferably, the magnetic thin film interference pigment particles comprise pigment particles having a five-layer Fabry-Perot multilayer structure and/or pigment particles having a six-layer Fabry-Perot multilayer structure and/or pigment particles having a seven-layer Fabry-Perot multilayer structure.

Preferred five-layer Fabry-Perot multilayer structures consist of absorber/dielectric/reflector/dielectric/absorber multilayer structures wherein the reflector and/or the absorber is also a magnetic layer, preferably the reflector and/or the absorber is a magnetic layer comprising nickel, iron and/or cobalt, and/or a magnetic alloy comprising nickel, iron and/or cobalt and/or a magnetic oxide comprising nickel (Ni), iron (Fe) and/or cobalt (Co).

Preferred six-layer Fabry-Perot multilayer structures consist of absorber/dielectric/reflector/magnetic/dielectric/absorber multilayer structures.

Preferred seven-layer Fabry Perot multilayer structures consist of absorber/dielectric/reflector/magnetic/reflector/dielectric/absorber multilayer structures such as disclosed in US 4,838,648.

Preferably, the reflector layers described herein are independently made from one or more materials selected from the group consisting of metals and metal alloys, preferably selected from the group consisting of reflective metals and reflective metal alloys, more preferably selected from the group consisting of aluminum (Al), silver (Ag), copper (Cu), gold (Au), platinum (Pt), tin (Sn), titanium (Ti), palladium (Pd), rhodium (Rh), niobium (Nb), chromium (Cr), nickel (Ni), and alloys thereof, even more preferably selected from the group consisting of aluminum (Al), chromium (Cr), nickel (Ni) and alloys thereof, and still more preferably aluminum (Al). Preferably, the dielectric layers are independently made from one or more materials selected from the group consisting of metal fluorides such as magnesium fluoride (MgF₂), aluminum fluoride (AlF₃), cerium fluoride (CeF₃), lanthanum fluoride (LaF₃), sodium aluminum fluorides (e.g. Na₃AlF₆), neodymium fluoride (NdF₃), samarium fluoride (SmF₃), barium fluoride (BaF₂), calcium fluoride (CaF₂), lithium fluoride (LiF), and metal oxides such as silicium oxide (SiO), silicium dioxide (SiO₂), titanium oxide (TiO₂), aluminum oxide (Al₂O₃), more preferably selected from the group consisting of magnesium fluoride (MgF₂) and silicium dioxide (SiO₂) and still more preferably magnesium fluoride (MgF₂). Preferably, the absorber layers are independently made from one or more materials selected from the group consisting of aluminum (Al), silver (Ag), copper (Cu), palladium (Pd), platinum (Pt), titanium (Ti), vanadium (V), iron (Fe) tin (Sn), tungsten (W), molybdenum (Mo), rhodium (Rh), Niobium (Nb), chromium (Cr), nickel (Ni), metal oxides thereof, metal sulfides thereof, metal carbides thereof, and metal alloys thereof, more preferably selected from the group consisting of chromium (Cr), nickel (Ni), metal oxides thereof, and metal alloys thereof, and still more preferably selected from the group consisting of chromium (Cr), nickel (Ni), and metal alloys thereof. Preferably, the magnetic layer comprises nickel (Ni), iron (Fe) and/or cobalt (Co); and/or a magnetic alloy comprising nickel (Ni), iron (Fe) and/or cobalt (Co); and/or a magnetic oxide comprising nickel (Ni), iron (Fe) and/or cobalt (Co). When magnetic thin film interference pigment particles comprising a seven-layer Fabry-Perot structure are preferred, it is particularly preferred that the magnetic thin film interference pigment particles comprise a seven-layer Fabry-Perot absorber/dielectric/reflector/magnetic/reflector/dielectric/absorber multilayer structure consisting of a Cr/MgF₂/Al/Ni/Al/MgF₂/Cr multilayer structure.

The magnetic thin film interference pigment particles described herein may be multilayer pigment particles being considered as safe for human health and the environment and being based for example on five-layer Fabry-Perot multilayer structures, six-layer Fabry-Perot multilayer structures and seven-layer Fabry-Perot multilayer structures, wherein said pigment particles include one or more magnetic layers comprising a magnetic alloy having a substantially nickel-free composition including about 40 wt-% to about 90 wt-% iron, about 10 wt-% to about 50 wt-% chromium and about 0 wt-% to about 30 wt-% aluminum. Typical examples of multilayer pigment particles being considered as safe for human health and the environment can be found in EP 2 402 401 A1.

Thin film interference pigment particles and magnetic thin film interference pigment particles described herein are typically manufactured by a conventional deposition technique of the different required layers onto a web. After deposition of the desired number of layers, e.g. by physical vapor deposition (PVD), chemical vapor deposition (CVD) or electrolytic deposition, the stack of layers is removed from the web, either by dissolving a release layer in a suitable solvent, or by stripping the material from the web. The so-obtained material is then broken down to flakes which have to be further processed by grinding, milling (such as for example jet milling processes) or any suitable method so as to obtain pigment particles of the required size. The resulting product consists of flat flakes with broken edges, irregular shapes and different aspect ratios. Further information on the preparation of suitable pigment particles can be found e.g. in EP 1 710 756 A1 and EP 1 666 546 A1.

Suitable interference coated pigments include without limitation structures consisting of a non-magnetic material selected from the group consisting of metallic cores such as titanium, silver, aluminum, copper, chromium, germanium, molybdenum or tantalum coated with one or more layers made of metal oxides as well as structures consisting of a core made of synthetic or natural micas, other layered silicates (e.g. talc, kaolin and sericite), glasses (e.g. borosilicates), silicium dioxides (SiO₂), aluminum oxides (Al₂O₃), titanium oxides (TiO₂), graphites and mixtures thereof coated with one or more layers made of metal oxides (e.g. titanium oxides, zirconium oxides, tin oxides, chromium oxides, nickel oxides and copper oxides), the structures described hereabove have been described for example in Chem. Rev. 99 (1999), G. Pfaff and P. Reynders, pages 1963-1981 and WO 2008/083894 A2. Typical examples of these interference coated pigments include without limitation silicium oxide cores coated with one or more layers made of titanium oxide and/or tin oxide; natural or synthetic mica cores coated with one or more layers made of titanium oxide and/or, silicium oxide, in particular mica cores coated with alternate layers made of silicium oxide and titanium oxide; borosilicate cores coated with one or more layers made of titanium oxide, silicium oxide and/or tin oxide; and titanium oxide cores coated with one or more layers made of chromium oxide, copper oxide, cerium oxide, aluminum oxide, silicium oxide, bismuth vanadate, nickel titanate, cobalt titanate and/or antimony-doped, fluorine-doped or indium-doped tin oxide; aluminum oxide cores coated with one or more layers made of titanium oxide.

Liquid crystals in the cholesteric phase exhibit a molecular order in the form of a helical superstructure perpendicular to the longitudinal axes of its molecules. The helical superstructure is at the origin of a periodic refractive index modulation throughout the liquid crystal material, which in turn results in a selective transmission / reflection of determined wavelengths of light (interference filter effect). Cholesteric liquid crystal polymers can be obtained by subjecting one or more crosslinkable substances (nematic compounds) with a chiral phase to alignment and orientation. The particular situation of the helical molecular arrangement leads to cholesteric liquid crystal materials exhibiting the property of reflecting a circularly polarized light component within a determined wavelength range. The pitch (i.e. the distance over which a full rotation of 360° of the helical arrangement is completed) can be tuned in particular by varying selectable factors including the temperature and solvents concentration, by changing the nature of the chiral component(s) and the ratio of nematic and chiral compounds. Crosslinking under the influence of UV radiation freezes the pitch in a predetermined state by fixing the desired helical form so that the color of the resulting cholesteric liquid crystal materials is no longer depending on external factors such as the temperature. Cholesteric liquid crystal materials may then be shaped to cholesteric liquid crystal pigments by subsequently comminuting the polymer to the desired particle size. Examples of films and pigments made from cholesteric liquid crystal materials and their preparation are disclosed in US 5,211,877; US 5,362,315 and US 6,423,246 and in EP 1 213 338 A1; EP 1 046 692 A1 and EP 0 601 483 A1.

Suitable magnetic cholesteric liquid crystal pigment particles exhibiting optically variable characteristics include without limitation magnetic monolayered cholesteric liquid crystal pigment particles and magnetic multilayered cholesteric liquid crystal pigment particles. Such pigment particles are disclosed for example in WO 2006/063926 A1, US 6,582,781 and US 6,531,221. WO 2006/063926 A1 discloses monolayers and pigment particles obtained therefrom with high brilliance and colorshifting properties with additional particular properties such as magnetizability. The disclosed monolayers and pigment particles, which are obtained therefrom by comminuting said monolayers, include a three-dimensionally crosslinked cholesteric liquid crystal mixture and magnetic nanoparticles. US 6,582,781 and US 6,410,130 disclose platelet-shaped cholesteric multilayer pigment particles which comprise the sequence A¹/B/A², wherein A¹ and A² may be identical or different and each comprises at least one cholesteric layer, and B is an interlayer absorbing all or some of the light transmitted by the layers A¹ and A² and imparting magnetic properties to said interlayer. US 6,531,221 discloses platelet-shaped cholesteric multilayer pigment particles which comprise the sequence A/B and optionally C, wherein A and C are absorbing layers comprising pigment particles imparting magnetic properties, and B is a cholesteric layer.

Suitable magnetic materials for security applications include without limitation the optically variable magnetic or magnetizable materials described herein as well iron, nickel, cobalt, manganese or their magnetic alloys, carbonyl iron, chromium dioxide CrO₂, magnetic iron oxides (e.g. Fe₂O₃; Fe₃O₄), magnetic ferrites M(II)Fe(III)₂O₄ or hexaferrites M(II)Fe(111)₁₂O₁₉, the magnetic garnets M(III)₃Fe(III)₅O₁₂ (such as Yttrium iron garnet Y₃Fe₅O₁₂) or their magnetic isostructural substitution products and particles with permanent magnetization (e.g. CoFe₂O₄). Preferably, the one or more security inks described herein comprise from about 3 to about 70 wt-%, preferably from about 10 wt-% to about 50 wt-%, more preferably from about 20 wt-% to about 40 wt-%, of the magnetic materials described herein, the weight percents being based on the total weight of the security ink.

Luminescent materials are widely used in security applications. Luminescent compounds may be inorganic (inorganic host lattices doped with luminescent ions), organic or organometallic (complexes of luminescent ion(s) with organic ligand(s)) substances. Luminescent compounds can absorb certain types of energy acting upon them and subsequently emit at least partially this absorbed energy as electromagnetic radiation. Luminescent compounds are detected by exposing them to a certain wavelength of light and analyzing the emitted light. Down-converting luminescent compounds absorb electromagnetic radiation at a higher frequency (shorter wavelength) and at least partially re-emit it at a lower frequency (longer wavelength). Up-converting luminescent compounds absorb electromagnetic radiation at a lower frequency and at least partially re-emit part of it at a higher frequency. Luminescent materials may be divided in: (i) phosphorescent materials wherein a time-delayed radiation emission is observable after the excitation radiation is removed (typically, with a decay lifetime from above about 1 µs to about 100 s), and (ii) fluorescent materials wherein a prompt radiation emission upon excitation is observable (typically, with a decay lifetime below 1 µs). Both fluorescent and phosphorescent compounds are suitable for the present invention. In the case of phosphorescent compounds, measurement of decay characteristics may also be carried out and used as a machine readable security feature. Both fluorescent and phosphorescent compounds are suitable for the present invention. Preferably, the one or more security inks described herein preferably comprise from about 10 wt-% to about 50 wt-% of the luminescent materials described herein, the weight percents being based on the total weight of the security ink.

According to one embodiment, the one or more security features described herein are preferably indicia made of one or more security inks, wherein said security inks comprises one or more luminescent materials such as those described herein. Advantageously, the one or more security features comprising one or more luminescent materials may be easily used for the automatic sorting of the cold transfer postage stamps described herein. Advantageously, and due to the lack of a permanent substrate (that is commonly used for postage stamps of the prior art) that may potentially inherently absorb the long wave UV (365 nm) or the short wave UV (254 nm) radiation that is used to activate said luminescent material, the cold transfer postage stamps described herein may be easily sorted. Hence, standard luminescent materials already accepted and registered by post offices and printed in the same amount as in standard postage stamps may be used.

Luminescent dyes for the present invention are known in the art and may be selected from the group consisting of naphthalmides, coumarins, rhodamines, fluroresceins, distyryl biphenyls, stilbenes, cyanines, phthalocyanines, xanthenes, thioxanthenes, naphtholactames, azlactones, methanes, oxazines, pyrazolines, polypyridyl-ruthenium complexes, polypyridyl-phenazine-ruthenium complexes, platinum-porphyrin complexes, long-life europium and terbium complexes and mixtures thereof. Typical examples of dyes suitable for the present invention are e.g. Solvent Yellow 44, Solvent Yellow 94, Solvent Yellow 160, Basic Yellow 40, Basic Red 1, Basic Violet 10, Acid Red 52, Yellow s790, fluorescein isothiocyanate, tris(2,2'-bipyridyl)-ruthenium chloride, tris(1,10-phenanthroline)-ruthenium chloride, octaethyl-platinum-porphyrin. Luminescent materials in pigment form have been widely used in inks (see US 6 565 770, WO 2008/033059 A2 and WO 2008/092522 A1). Examples of luminescent materials include among others oxides, sulfides, oxysulfides, phosphates, thiogallates, aluminates, borates, silicates, vanadates, titanates, *etc.* of non-luminescent cations, doped with at least one luminescent cation chosen from the group consisting of transition-metal and the rare-earth ions, such as e.g. those mentioned in EP 985 007 A1, US 6 180 029 B1 or US 7,476,411; rare earth oxysulfides and rare-earth metal complexes such as those described in WO 2009/005733 A2 or in US 7,108,742; luminescent materials having multiple repsonses to excitation such as e.g. those disclosed in US 8,257,612 Typical examples of luminescent materials include without limitation at least one lattice selected from the group consisting of yttrium compounds (preferably yttria, yttrium borate, yttrium phosphate, yttrium aluminate, yttrium borate), lutetium compounds (preferably lutetium oxide and lutetium aluminate) lanthanum compounds (preferably lanthanum oxide, lanthanum phosphate, lanthanum aluminate, lanthanum borate and lanthanum silicate) and mixtures thereof and at least one lanthanide element dopant (preferably selected from the group consisting of ytterbium cations, erbium cations, thulium cations and mixtures thereof) such as those describe in US 7,922,936 and EP 2 038 372 B1.

In particular, phosphorescent materials may be obtained by holding at least one phosphorescent activator within a matrix of a condensation resin. Examples of phosphorescent activators may be for example carbazole sulphonic acid, naphtalene disulphonic acid, diphenyl guanidine and 2-aminobenzoflavone. The condensation resin is preferably a condensation product of formaldehyde, generally with an amine group-containing compound, especially urea or melamine. The resin is formed by condensation in the presence of the phosphorescence activators so that the molecules of the latter are trapped and isolated from one another in the matrix. In order to be incorporated into a printing ink, the resin containing the phosphorescent activators may be finely ground and dispersed in a suitable ink vehicle, depending on the printing or coating technique being used. EP 0 325 825 A1, which is incorporated as reference in full herein, discloses improved phosphorescence activators that are a compound or mixture of compounds of the general formula
- (A)ₘ-Ar-CO-X
wherein Ar denotes a fused ring polycyclic aromatic group;
- m is zero or an integer of from 1 up to the maximum number of positions available for substitution;
- X denotes an alkyl group or a group of the formula (A)ₘ-Ar- or (B)ₙ *φ*-, wherein *φ* is a phenyl group and n is zero or an integer of from 1 to 5; and
- A and B represent ring substituents, or an acid addition salt thereof when said compound is basic.

Suitable phosphorescent activators include sulphonated p-aminobenzoyl naphtalene (EP 0 325 825 A1 - Example 3), 3-(4-aminobenzoyl) phenantrene (EP 0 325 825 A1 Example 1 -Table II) and 3-(4-methoxybenzoyl) phenanthrene (EP 0 325 825 A1 Example 2 - Table II). Security features comprising infrared (IR) absorbing materials are widely known and used in security applications. They are based on the absorption of electromagnetic radiation due to electronic transitions in a spectral range between about 700 nm and about 2500 nm. IR absorbing materials include inorganic materials, glasses comprising substantial amounts of IR-absorbing atoms or ions or entities which display IR-absorption as a cooperative effect, IR absorbing organic compounds and IR absorbing organometallic compounds (complexes of cation(s) with organic ligand(s), wherein either the separate cation and/or the separate ligand, or both in conjunction, have IR-absorbing properties). Preferably, the one or more security inks described herein comprise from about 5 wt-% to about 70 wt-%, preferably from about 10 wt-% to about 50 wt-%, more preferably from about 20 wt-% to about 50 wt-%, of the IR absorbing compounds described herein, the weight percents being based on the total weight of the security ink.

Typical examples of IR absorbing compounds include among others carbon black, quinone-diimmonium or aminium salts, polymethines (e.g. cyanines, squaraines, croconaines), phthalocyanine or naphthalocyanine type (IR-absorbing pi-system), dithiolenes, quaterrylene diimides, metal (such as for example transition metal or lanthanide) salts (such as for example fluorides, chlorides, bromides, iodides, nitrates, nitrites, sulfites, sulfates, phosphates, carbonates, borates, benzoates, acetates, chromates, hexaborides, molybdates, manganates, ferrates, organosulfates, organosulfonates, organophosphonates, organophosphates and phosphono-tungstanates), metal oxides (such as for example indium tin oxide, antimony tin oxide in nano-particulate form, doped tin(IV) oxide, cooperative property of the SnO₄ crystal), metal nitrides. Non-limiting examples of IR absorber compounds for use in the present invention include those disclosed in WO 2007/060133 A2, wherein the IR absorbing compound comprises a transition element compound and whose infrared absorption is a consequence of electronic transitions within the d-shell of transition element atoms or ions such as those described in WO 2007/060133 A2. Examples of IR absorbing compounds disclosed in WO 2007/060133 A2 include copper(II) fluoride (CuF₂), copper hydroxyfluoride (CuFOH), copper hydroxide (Cu(OH)₂), copper phosphate hydrate (Cu₃(PO₄)₂*2H₂O), anhydrous copper phosphate (Cu₃(PO₄)₂), basic copper(II) phosphates (e.g. Cu₂PO₄(OH), "Libethenite" whose formula is sometimes written as Cu₃(PO₄) 2*Cu(OH)₂; Cu₃(PO₄)(OH)₃, "Cornetite", Cu₅(PO₄)₃(OH)₄, "Pseudomalachite", CuAl₆(PO₄)₄(OH)_{g}•5H₂O "Turquoise", etc.), copper (II) pyrophosphate (Cu₂(P₂O₇)*3H₂O), anhydrous copper(II) pyrophosphate (Cu₂ (P₂O₇)), copper(II) metaphosphate (Cu(PO₃)₂, more correctly written as Cu₃(P₃O₉)₂), iron(II) fluoride (FeF₂*4H₂O), anhydrous iron(II) fluoride (FeF₂), iron(II) phosphate (Fe₃(PO₄)₂*8H₂O, "Vivianite"), lithium iron(II) phosphate (LiFePO₄, "Triphylite") , sodium iron(II) phosphate (NaFePO₄, "Maricite"), iron(II) silicates (Fe₂SiO₄, "Fayalite"; FexMg₂xSiO₄, "Olivine"), iron(II) carbonate (FeCO₃, "Ankerite", "Siderite"); nickel(II) phosphate (Ni₃(PO₄)₂*8H₂O), and titanium(III) metaphosphate (Ti(P₃O₉)). Moreover, a crystalline IR absorbing material may also be a mixed ionic compound, i.e., where two or more cations are participating in the crystal structure, as e.g. in Ca₂Fe(PO₄)₂*4H₂O, "Anapaite". Similarly, two or more anions can participate in the structure as in the mentioned basic copper phosphates, where OH⁻ is the second anion, or even both together, as in magnesium iron phosphate fluoride, MgFe(PO₄)F, "Wagnerite".

Depending on the printing process used to apply the one or more security inks described herein and depending on the hardening process used to form a solid coating, different inks may be used. Hardening generally may be any step that increases the viscosity of the ink such that a substantially solid material adhering to a surface is formed. Hardening may involve a physical process based on the evaporation of a volatile component, such as a solvent, and/or water evaporation (*i.e*. physical drying). Herein, hot air, infrared or a combination of hot air and infrared may be used. Alternatively, the hardening process may include a chemical reaction, such as a curing, a polymerization or a cross-linking of compounds comprised in the ink. Such a chemical reaction may be initiated by heat or IR irradiation as outlined above for the physical hardening processes, but may include the initiation of a chemical reaction by a radiation mechanism including without limitation radiation curing including Ultraviolet-Visible light radiation curing (hereafter referred as UV-Vis curing) and electronic beam radiation curing (E-beam curing); oxypolymerization; cross-linking reactions or any combination thereof. Consequently, the one or more security inks described herein are preferably selected from the group consisting of oxidative drying inks, radiation curable inks, thermal drying inks, and combination thereof. Examples of suitable inks may be found e.g. in The Printing Ink Manual, Ed R.H. Leach, R.J. Pierce, 5th Edition.

Oxidative drying inks dry by oxidation in the presence of oxygen, in particular in the presence of the oxygen of the atmosphere. During the drying process, the oxygen combines with one or more components of the ink, converting the ink to a solid state. The process may be accelerated by the use of driers (also referred in the art as catalysts, siccative agents, desiccatives or dessicators) such as for example inorganic or organic salts of metal(s), metallic soaps of organic acids, metal complexes and metal complex salts and/or by the application of a thermal treatment.

Thermal drying coating inks consist of inks of any type of aqueous compositions or solvent-based inks which are dried by hot air, infrared or by a combination of hot air and infrared.

Radiation curable coating inks include inks that may be cured UV-visible light radiation (hereafter referred as UV-Vis-curable) or by E-beam radiation (hereafter referred as EB). Preferably, the one or more security inks described herein consist of UV-Vis-curable inks preferably prepared from oligomers (also referred in the art as prepolymers) selected from the group consisting of radically curable compounds, cationically curable compounds and mixtures thereof. Depending on the monomers, oligomers or prepolymers used in the UV-Vis-curable inks described herein and as known by the man skilled in the art, different photoinitiators might be used. Additionally, it may also be advantageous to include a sensitizer in conjunction with the one or more photoinitiators in order to achieve efficient curing.

Alternatively, dual-cure inks may be used; these inks combine thermal drying and radiation curing mechanisms. Typically, such inks are similar to radiation curing inks but include a volatile part constituted by water and/or by solvent. These volatile constituents are evaporated first using hot air and/or IR driers, and UV-Vis drying is then completing the hardening process.

The one or more security inks described herein may further comprise one or more additives including without limitation compounds and materials which are used for adjusting physical, rheological and chemical parameters of the ink such as the viscosity (e.g. solvents and surfactants), the consistency (e.g. anti-settling agents, fillers and plasticizers), the foaming properties (e.g. antifoaming agents), the lubricating properties (waxes), UV stability (photostabilizers) and adhesion properties, *etc.* Additives described herein may be present in the coating compositions described herein in amounts and in forms known in the art, including in the form of so-called nano-materials where at least one of the dimensions of the particles is in the range of 1 to 1000 nm.

The one or more security inks described herein may be prepared by dispersing, mixing and/or milling all the ingredients forming liquid or pasty inks. When the one or more security inks described herein are UV-Vis-curable inks, the one or more photoinitiators may be added to the composition either during the dispersing or mixing step of all other ingredients or may be added at a later stage, i.e. after the formation of the inks. The viscosity of the one or more security inks described herein may be modified so as to fit the processing requirements depending on the printing process. The viscosity of the ink compositions described herein depends on the printing process chosen to apply this ink composition onto a substrate. Typically, viscous or pasty inks are required if the application process consists in intaglio printing processes and offset printing processes whereas liquid inks are required for application processes including screen printing processes, rotogravure printing processes, flexography printing processes and inkjet printing processes.

The cold transfer postage stamps described herein comprise a white opaque printed layer aimed at simulating the paper substrate of a conventional paper based postage stamp. The white opaque printed layer is obtained by applying a white ink by a printing process preferably selected from the group consisting of offset printing processes, rotogravure printing processes, flexography printing processes and inkjet printing processes. The white ink described herein typically comprises one or more white opaque pigments, preferably in an amount from about 1 wt-% to about 50 wt-%, more preferably from about 5 wt-% to about 40 wt-%, the weight percents being based on the total weight of the white ink. Typical examples of white opaque pigments include C. I. Pigment White 4, C.I Pigment White 6, C.I. Pigment White 7, C.I. Pigment White 21 and C. I. Pigment White 22, as well as blends thereof. Preferably, C.I. Pigment White 6 (titanium dioxide) is used as the white opaque pigments.

According to one embodiment, the cold transfer postage stamps described herein comprise one or more printed colored layers. Said one or more printed colored layers are obtained by applying one or more colored inks by a printing process preferably selected from the group consisting of offset printing processes, rotogravure printing processes, flexography printing processes, inkjet printing processes, and combinations thereof.

The colored inks described herein typically comprise one or more dyes, preferably in an amount from about 1 to about 60 wt-%, and/or one or more of inorganic pigments, organic pigments or mixtures thereof, preferably in an amount from about 1 wt-% to about 50 wt-%, more preferably from about 5 wt-% to about 40 wt-%, the weight percents being based on the total weight of the colored ink and, as known by those skilled in the art, the suitable amount of dye or pigment depending on the printing technique being used. Suitable dyes are known in the art and are preferably selected from the group comprising reactive dyes, direct dyes, anionic dyes, cationic dyes, acid dyes, basic dyes, food dyes, metal-complex dyes, solvent dyes and mixtures thereof. Typical examples of organic and inorganic pigments include without limitation C.I. Pigment Yellow 12, C.I. Pigment Yellow 42, C.I. Pigment Yellow 93, 109, C.I. Pigment Yellow 110, C.I. Pigment Yellow 147, C.I. Pigment Yellow 173, C.I. Pigment Orange 34, C.I. Pigment Orange 48, C.I. Pigment Orange 49, C.I. Pigment Orange 61, C.I. Pigment Orange 71 C.I. Pigment Orange 73, C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179, C.I. Pigment Red 185, C.I. Pigment Red 202, C.I. Pigment Red 224, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, C. I. Pigment White 4, C.I Pigment White 6, C.I. Pigment White 7, C.I. Pigment White 21, C. I. Pigment White 22" antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black,mixed metal oxides, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone pigments.

As mentioned hereabove for the one or more security inks, the white inks for the white opaque printed layer and the colored inks for the printed colored layer(s), when present, are preferably independently selected from the group consisting of oxidative drying inks, radiation curable inks, thermal drying inks, and combination thereof.

As shown in Figure 1, the cold transfer postage stamps described herein comprise a first release coated substrate (1) and a second release coated substrate (5). The first release coated substrate (1) provide protection for the printed layer (2) comprising one or more security features (6) and the second release coated substrate (5) provide protection for the pressure sensitive adhesive layer (4), respectively, until the cold transfer postage stamp described herein is ready for use.

As shown in Figure 1, the first release coated substrate (1) and the second release coated substrate (5) face the environment, the first release coated substrate (1) faces the printed layer (2) comprising one or more security features (6); the second release coated substrate (5) faces the pressure sensitive adhesive layer (4); the white opaque printed layer (3) faces both the printed layer (2) comprising one or more printed security features (6) and the pressure sensitive adhesive layer (4). The cold transfer postage stamp described herein may further comprise one or more printed colored layers, said one or more printed colored layers either facing both the printed layer (2) comprising one or more security features (6) and the white opaque printed layer (3) or facing both the first release coated substrate (1) and the printed layer (2) comprising one or more security features (6), or facing the first release coated substrate (1) and the white opaque printed layer (3). When the cold transfer postage stamp is to be used and applied on a mail piece (0), the second release coated substrate (5) is removed or peeled off so that the pressure sensitive adhesive layer (4) faces the environment and may be put in direct contact with the mail piece (0).

Suitable substrates for the present invention include without limitation papers or other fibrous materials such as cellulose, paper-containing materials, plastic or polymer substrates, composite substrates and combinations thereof. Typical examples of plastic or polymer substrates are substrates made of polypropylene (PP), polyethylene (PE), polycarbonate (PC), polyvinyl chloride (PVC) and polyethylene terephthalate (PET). Typical examples of composite materials include without limitation multilayer structures or laminates of paper and at least one plastic or polymer material such as those described hereabove as well as plastic and/or polymer fibers incorporated in a paper-like or fibrous material such as those described hereabove.

The first and second substrates described herein are independently coated with a release layer so as to form a first release coated substrate and a second release coated substrate, respectively. As known by the man skilled in the art, the choice of the release layer depends on the substrate. Preferably, the release layers described herein are selected from polyolefin (e.g. polyethylene) layers, silicon-based layers (e.g. polysiloxane and derivatives thereof), fluorocarbon-based layers, wax-based layers, urethane-bases layers, long chain alkyl acrylate-based layers, carbamate-based layers and combinations thereof.

The release layers described herein are independently applied to the first substrate and second substrate, respectively, by any coating process known in the art, such as for example air knife, roll coater or metered bar, by a printing process such as for example rotogravure printing or flexography printing or by an extrusion method. Alternatively, the release coating layers may be co-extruded with the corresponding first or second substrates.

The cold transfer postage stamps described herein comprise a pressure sensitive adhesive layer. The pressure sensitive layer can be made of any conventional pressure sensitive adhesive that combines a good adhesion to the white opaque printed layer described herein and a non-permanent adhesion to the second release coated substrate, preferably to the second release coated substrate.

Pressure sensitive adhesives are generally described in Satas, Ed., Handbook of Pressure Sensitive Adhesives 2nd Ed. Typical examples of pressure sensitive layers include without limitation acrylic adhesive layers and rubber based adhesive layers.

According to one embodiment, the pressure sensitive adhesive layer is a (meth)acrylic (i.e. acrylic and/or methacrylic) adhesive layer comprising one or more polymers and/or copolymers derived from (meth)acrylic acid, ester, amide or nitrile derivatives thereof. Examples of useful acrylic adhesive layers include without limitation homopolymers and copolymers of (meth)acrylic acid, isooctyl acrylate, (meth)acrylamide, (meth)acrylonitrile, methyl isoamyl acrylate, 2-ethyl hexylacrylate, and butyl acrylate.

According to another embodiment, the pressure sensitive adhesive layer is a rubber based adhesive layer comprising one or more elastomeric compounds selected from the group consisting of natural rubbers, nitrile rubbers, butadiene rubbers, isobutylene rubbers, isobutylene-isoprene rubbers, styrene-butadiene rubbers, styrene block copolymers (such as for example styrene-butadiene-styrenes, styrene-ethylene/butylene-styrenes, styrene-ethylene/propylenes and styrene-isoprene-styrenes), polysiloxane rubbers, ethylene-vinyl acetate copolymers, vinylether poylmers and mixtures thereof.

The pressure-sensitive adhesive layer may further comprise one or more tackifiers. Examples of tackifiers include without limitation terpene resins, phenol resins, terpene-phenol resins, rosins, disproportionated rosins, rosin esters, esters of hydrogenated rosins, synthetic hydrocarbon resins (such as for example C5 aliphatic, C9 aromatic or C5/C9 aliphatic/aromatic resins), coumarone-inden resins, low molecular weight polybutenes and tackifying silicone resins..

The pressure-sensitive adhesive layer may further comprise one or more plasticizers. Example of plasticizers include without limitation polyglycol ethers, polyethylene oxides, phosphate esters, aliphatic carboxylic acid esters, benzoic esters, dibenzoic esters and phtalic esters.

The pressure sensitive adhesives described herein may be applied by a coating process such as for example air knife, roll coater, or metered bar processes or by a printing process such as for example offset printing processes, rotogravure printing processes, flexography printing processes or inkjet printing processes.

The cold transfer postage stamps described herein may further comprise a first protective layer, said first protective layer being comprised between the printed layer comprising one or more security features described herein and the first release coated substrate described herein. Suitable materials for the optional first protective layer described herein include without limitation thermoplastic resins such as polyolefin (such as polyethylene and polypropylene), polyurethane and derivatives (such as polyurethane polyol), cellulose derivatives (such as ethyl cellulose, nitro cellulose, cellulose acetate and poly(cellulose acetate butyrate)), polysiloxane derivatives (such as poylether siloxane copolymers), acrylic or methacrylic resins (such as polymethyl methacrylate, polyethyl methacrylate, polybutyl methacrylate), polyvinyl chloride or vinyl copolymers (such as vinyl chloride-vinyl acetate copolymer, and polyvinyl butyral), polyester, epoxy resin, ketone or aldehyde resin, amino resin, and copolymers and blends thereof. The optional first protective layer may be applied onto the first release coated substrate using a known coating or printing method, such as flexography printing, rotogravure printing, roller coating (such as reverse roll coating), metered bar coating, slot die coating (such as curtain coating or cascade coating) or air knife coating.

The cold transfer postage stamps described herein may further comprise a second protective layer, said second protective layer being comprised between the white opaque layer described herein and the pressure sensitive adhesive layer described herein. Suitable examples of materials for the optional second protective layer described herein include without limitation thermoplastics such as those described hereabove for the optional first protective layer, or thermoset resins such as for example saturated or unsaturated polyester resins, polyurethane resins, epoxy resins, thermally cross-linkable epoxy-amino resins, amino alkyd resins, metal cross-linked acrylic styrene copolymer, and copolymers and blends thereof. The optional second protective layer may be applied onto the white opaque printed layer using a coating or printing method such as those described above for the optional first protective layer.

The cold transfer postage stamps described herein are particularly suitable to be applied on a mail piece for preventing the misuse of a postage stamp that erroneously lacks a cancellation mark.

The present invention provides mail pieces, such as for example envelopes, parcels or packages for delivery, comprising a postage stamp comprising a pressure sensitive adhesive layer such as those described herein, a white opaque printed layer such as those described herein, one or more printed layers comprising one or more security inks such as those described herein and one or more optional printed colored layers such as those described herein, wherein said mail pieces are preferably produced by carrying out a cold transfer process at room temperature. The cold transfer process consists of a) removing the second release coated substrate of the cold transfer postage stamp described herein, b) applying at room temperature the cold transfer postage stamp to a mail piece and c) removing the first release coated substrate from the cold transfer postage stamp.

The present invention provides a process for producing the cold transfer postage stamp described herein and cold transfer postage stamps obtained thereof, said process comprising the steps of:
i) providing the first release coated substrate described herein,
ii) applying by a printing process one or more security inks so as to form the printed layer comprising one or more security features described herein,
iii) applying by a printing process the white ink described herein so as to form the white opaque printed layer described herein,
iv) applying the pressure sensitive adhesive layer described herein, and
v) applying the second release coated substrate described herein on the structure obtained under step iv).

The process described herein may further comprise a step of applying by a printing process one or more colored inks so as to form the one or more printed colored layers described herein, said step being carried out before step ii), after step ii) or simultaneously with step ii). The one or more colored inks may be printed in register with the one or more printed layers comprising one or more security features, or alternatively, may be printed such that they at least partially overlap. The step of providing a first release coated substrate (step i)) may consist of a single step or may consist of a two-step process wherein a first substrate is first coated with a release layer to form the first release coated substrate. In step v), the second release coated substrate may be applied directly to the pressure sensitive adhesive layer of step iv), or alternatively, a release layer may be applied to a substrate to form the second release coated substrate, said second release coated substrate being then applied to the pressure sensitive adhesive layer of step iv). The printing process of step ii) is preferably selected from the group consisting of intaglio printing processes, offset printing processes, screen printing processes, rotogravure printing processes, flexography printing processes, inkjet printing processes and combinations thereof.

When present, the one or more printed colored layers described herein are preferably printed using a printing process selected from the group consisting of offset printing processes, rotogravure printing processes, flexography printing processes, inkjet printing processes and combinations thereof.

The printing process of step iii) is preferably selected from the group consisting of offset printing processes, rotogravure printing processes, flexography printing processes and inkjet printing processes.

The step iv) of applying the pressure sensitive adhesive layer described herein may be carried out by any of the printing or coating methods described hereabove, flexography printing, rotogravure printing and metered rod coating being preferred.

The step v) of applying the second release coated substrate described herein on the pressure sensitive adhesive layer of step iv) may be carried out by any mechanical mean known in the art, such as feeding the second release coated substrate from a reel, and applying it to the pressure sensitive adhesive layer through a nip. The complete structure may then be round up into a reel and slit to appropriate size before supplying it to customers.

The present invention further provides a method for preventing re-use of a postage stamp erroneously lacking a cancellation mark, said method comprising the steps of a) removing the second release coated substrate (5) of the cold transfer postage stamp described herein, b) applying at room temperature the cold transfer postage stamp to a mail piece and c) removing the first release substrate (1) from the cold transfer postage stamp. The present invention will now be described by way of Examples, which are however not intended to limit its scope in any way.

### EXAMPLE

The example has been carried out by using the inks or compositions described in Tables 1a to 1g.

**Table 1a. Composition for the pressure sensitive adhesive layer**

| Compound | Supplier | Amount [kg] | Amount [wt-%] |
|---|---|---|---|
| Acronal^{®} V 212 | BASF | 0.332 | 66.4 |
| Acrylic ester dispersion (10% polybutyl acrylate dispersion in water) | | | |
| Snowtack^{™} 765A tackifier (disproportionated rosin dispersion) | Lawter | 0.1 | 20 |
| Amine solution 25%^{a} | | 0.008 | 1.6 |
| Acrylic emulsion^{b} | | 0.056 | 11.2 |
| Dapro^{®} DF21 defoamer | Elementis | 0.0015 | 0.3 |
| Surfynol 104E surfactant | Air Products | 0.0025 | 0.5 |

| | | | |
|---|---|---|---|
| ^{a} 25 g of N-methyl diethanolamine (from Aldrich chemical) were slowly added whilst stirring to 75 grams of deionized water in a 250 mL vessel so as to obtain a solution having a pH of 11-11.5. ^{b}21.6 g of amine solution 20%^{c} were added to 15.9 grams of deionized water in a 250 mL vessel. 112.5 g of acrylic emulsion (Neocryl^{®} BT-9 from DSM) were then slowly added whilst mixing so as to obtain a solution having a pH of 7.5 +/- 0.3. ^{c} 20 g of dimethyl amino hydroxypropane (Bisomer^{®} Amine D700 from GEO Specialty) were slowly added whilst stirring to 80 g of deionized water in a 250 mL vessel so as to a solution having a pH of 11-11.5. | | | |

**Table 1b. Colored ink**

| Compound | Supplier | Amount [kg] | Amount [wt-%] |
|---|---|---|---|
| Vinyl chloride resin dispersion^{d} | | 0.150 | 30.0 |
| Pigment dispersion^{e} | | 0.350 | 70.0 |

| | | | |
|---|---|---|---|
| ^{d} 75 g of the vinyl chloride resin (Vinnol^{®} E22/48A from Wacker) were slowly added under high shear mixing to 409 g of ethyl acetate (Banner chemicals) in a 1 L mixing vessel. 16 g of acrylic resin (Acronal^{®} 4F from BASF) were then added and mixed until full dispersion. ^{e} 20 g of vinyl chloride resin (Vinnol^{®} E22/48A from Wacker) were slowly added under high shear mixing to 400 g of ethyl acetate (from Banner Chemicals) was poured into a 1 L mixing vessel. 20 g of vinyl chloride resin (Vinnol^{®} E22/48A from Wacker) were subsequently and slowly added under high shear mixing. 80 g of pigment blue 15:3 pigment preparation (Microlith^{®} 7080-k from BASF) were then added and mixed under high shear until full dispersion. | | | |

**Table 1c. White ink**

| Compound | Supplier | Amount [kg] | Amount [wt-%] |
|---|---|---|---|
| Ethanol | Banner Chemicals | 0.247 | 49.45 |
| ZE502006 | Flint | 0.247 | 49.45 |
| Polyvinylbutyral/ white pigment chip^{f} | | | |
| TEGO^{®} VariPlus 1201 TF | Evonik | 0.006 | 1.1 |
| Polyurethane polyol resin | | | |

| | | | |
|---|---|---|---|
| Pigment Cl White 6 77 wt-% content | | | |

**Table 1d. Security ink**

| Compound | Supplier | Amount [kg] | Amount [wt-%] |
|---|---|---|---|
| Mowital^{®} LPB16H | Kuraray | 0.075 | 15 |
| Polyvinyl butyral resin | | | |
| Ethanol | Banner Chemicals | 0.300 | 60 |
| Phosphorescent activator in an urea formaldehyde resin condensate (according to EP 0 325 825 A1) | Dane group | 0.125 | 25 |

**Table 1e. Composition for the first release coated substrate**

| Compound | Supplier | Amount [kg] | Amount [wt-%] |
|---|---|---|---|
| Michem^{®} 91240G | Michelman | 0.431 | 86.2 |
| Polyethylene emulsion | | | |
| Viscoplus 3000 | Evonik | 0.005 | 1.0 |
| Polyurethane non-ionic thickener | | | |
| 2,4,7,9 Tetramethyl-5-decyne-4,7-diol | Air Products | 0.001 | 0.2 |
| Airex 901 W | Evonik | 0.002 | 0.4 |
| Polyether siloxane | | | |
| Foamex 845 | Evonik | 0.001 | 0.2 |
| Organomodified polysiloxane | | | |
| Isopropyl alcohol | Banner Chemicals | 0.04 | 8 |
| Deionized water | | 0.02 | 4 |

**Table 1f. Composition for the first protective layer**

| Compound | Supplier | Amount [kg] | Amount [wt-%] |
|---|---|---|---|
| Ethanol | Banner Chemicals | 0.396 | 79.29 |
| Mowital^{®} LPB16H | Kuraray | 0.089 | 17.71 |
| Polyvinyl butyral resin | | | |
| TEGO^{®} VariPlus 1201 TF | Evonik | 0.015 | 3.0 |
| Polyurethane polyol | | | |

**Table 1g. Composition for the second protective layer**

| Compound | Supplier | Amount [kg] | Amount [wt-%] |
|---|---|---|---|
| Vinnol ^{®} H15/45M | DSM | 0.075 | 15.0 |
| vinyl copolymer resin | | | |
| Ethyl acetate | Banner Chemicals | 0.409 | 81.8 |
| Acronal^{®} 4F | BASF | 0.016 | 3.2 |
| acrylic resin | | | |

| | | | |
|---|---|---|---|
| Substrate for the first release coated substrate: PET film (Mitsubishi Polymer Films GmbH, Hostaphan^{®} 36 µm). Second release coated substrate: silicone coated glassine paper (Avery-Dennison BG50WH HR 68 ± 5 µm). | | | |

### A) Preparation of the pressure sensitive adhesive layer composition (Table 1a)

In a 1.0 L vessel, 0.008 kg of the amine solution 25% were added under gentle stirring to 0.332 kg of the acrylic ester dispersion so as to obtain a solution having a pH of 7,5 ± 0.3. 0.100 kg of the tackifier and 0.056 kg of the acrylic emulsion were added under gentle stirring. 0.0015 kg of the defoamer were added followed by 0.0025 kg of the surfactant. The mixture was then stirred for approximately 30 minutes. The temperature was kept below 23°C throughout the preparation.

### B) Preparation of the colored ink (Table 1b)

In a 1.0 L vessel, 0.150 kg of the vinyl chloride resin dispersion were added under gentle stirring to 0.350 kg of the pigment dispersion until a homogenous mixture was obtained.

### C) Preparation of the white ink (Table 1c)

In a 1.0 L vessel, 0.247 kg of the white pigment chip were slowly added under high shear mixing to 0.247 kg of ethanol until full dispersion. 0.060 kg of the polyurethane polyol resin were subsequently added.

### D) Preparation of the security ink (Table 1d)

In a 1.0 L vessel, 0.075 kg of the polyvinyl butyral resin were added under high shear mixing to 0.3 kg of ethanol. 0.125 kg of the phosphorescent activator were subsequently added until full dispersion.

### E) Preparation of the composition for the first release coated substrate (Table 1e)

In a 1.0 L vessel, a mixture of 40 g of isopropyl alcohol and 20 g of deionized water (was added under gentle stirring to 0.431 kg of the polyethylene emulsion. 5 g of the polyurethane non-ionic thickener were subsequently added. 2 g of the polyether siloxane and 1 g of the organomodified polysiloxane were subsequently added under shear, followed by the addition of 0.1 g of the 2,4,7,9 tetramethyl-5-decyne-4,7-diol.

### F) Preparation of the first protective layer composition (Table 1f)

In a 1.0 L vessel, 0.089 kg of the polyvinyl butyral resin were added under high shear mixing to 0.396 kg of ethanol. 0.015 kg of the polyurethane polyol were subsequently added.

### G) Preparation of the second protective layer composition (Table 1g)

0.409 kg of ethyl acetate was poured into a 1.0 L vessel. 0.075 kg of the vinyl copolymer resin were slowly added under high shear mixing followed by 0.016 kg of the acrylic resin. The composition was mixed until full dispersion.

### Preparation of the cold transfer postage stamp

A sheet (25 cm x 12 cm) was cut from the substrate for the first release coated substrate. The composition for the first release coated substrate described herein under E) was applied to said sheet by hand coating with a metered rod (coat weight of 1.0 ± 0.25 g/m²) so as to form the first release coated substrate. The composition covered the entire first substrate. This layer was dried using a standard hair drier for approximately 10 seconds. The first protective layer composition described herein under F) was applied to the first release coated substrate by metered rod (grammage: 1.25 ± 0.25 g/m²). The first protective layer composition was applied such that the sheet cut from the substrate was completely covered by the composition for the first release coated substrate (E). This layer was dried using a standard hair drier for approximately 10 seconds.

The security ink described herein under D) was applied by rotogravure printing using a RK Proofer provided by RK PrintCoat Instruments Ltd so as to obtain printed layers comprising security features. The security ink was applied using a printing plate comprising a solid block area (14.5 cm x 5 cm) (150 lines/inch screen, 100% cell density, 1.5 ± 0.25 g/m² grammage) in such a way that it formed, when printed, a solid strip of 14.5 cm x 5.0 cm. This printed layer comprising security features was dried using a standard hair drier for approximately for 5 seconds.

The colored ink described herein under B) was subsequently applied on top of the layer made of the security ink by rotogravure printing using a step wedge printing plate (five rectangles equally spaced, each measuring 2.5 cm x 5 cm reducing in increments of 10% cell density from 100% at the top to 60% at the bottom)so as to form a color layer. The measured grammage for the two first rectangles (see below for the application of the second release coated substrate) was 1.20 g/m² and 0.90 g/m², respectively. This printed colored layer was dried using a standard hair drier for approximately 5 seconds.

The white ink described herein under C) was applied by rotogravure printing using a solid block area (14.5 cm x 5 cm) (150 lines/inch, 100% cell density, 1.5 ± 0.25 g/m² grammage) so as to form the white opaque printed layer. This white opaque printed layer was dried using a standard hair drier for approximately 5 seconds.

The second protective layer composition described herein under G) was applied with a metered rod (grammage: 0.75 ± 0.25 g/m²) so as to from the second protective layer covering all layers obtained as previously described coating or printing steps. This second protective layer was dried using a standard hair drier for approximately 5 seconds.

The pressure sensitive adhesive layer composition described herein under A) was applied to the second protective layer by metered rod (a coat weight of 6.0 ± 0.5 g/m²) so as to form the pressure sensitive adhesive layer and so that the second protective layer was covered by the pressure sensitive layer. This pressure sensitive adhesive layer was dried using a standard hair drier for approximately 10 seconds.

Finally, a square of about 6 cm x 6 cm was cut from an A4 sized sheet of the second release coated substrate. Said second release coated substrate was applied on top of the pressure sensitive adhesive layer using finger pressure so that it covered the two first rectangles of the step wedge used for printing the colored layer. After a period of at least 20 hours, two rectangles of about 3 cm x 6 cm were cut out from the whole assembly, each comprising one of the two rectangles of the step wedge used for printing the colored layer, so as to form cold transfer postage stamps.

### Application of the cold transfer postage stamp to a mail piece

The second release coated substrate was removed from the cold transfer postage stamp so that the pressure sensitive adhesive layer faced the environment. The cold transfer postage stamp was applied to an envelope by facing the pressure sensitive adhesive layer towards said envelope. Firm finger pressure was applied to the whole surface of the stamp thus ensuring that it was well adhered to the envelope. The first release coated substrate was removed and the cold transfer postage stamp stayed in place on the envelope.

## Claims

1. A cold transfer postage stamp comprising in the following order:
a) a first release coated substrate (1),
b) one or more printed layers (2) formed by a printing process with one or more security inks and comprising one or more security features (6), which faces the environment after removal of the first release coated substrate (1) (a),
c) a white opaque printed layer (3) formed from a white ink,
d) a pressure sensitive adhesive layer (4), and
e) a second release coated substrate (5).

2. The cold transfer postage stamp according to claim 1, wherein the one or more security features (6) of the printed layer (2) b) are selected from the group consisting of intaglio printed patterns, indicia made of one or more security inks and combinations thereof.

3. The cold transfer postage stamp according to claim 2, wherein the intaglio printed patterns and/or the one or more security inks comprise one or more security materials selected from the group consisting of optically variable materials, luminescent materials, magnetic materials, IR absorbing materials and combinations thereof.

4. The cold transfer postage stamp according to any preceding claim, wherein the first release coated substrate (1) and the second release coated substrate (5) are independently prepared from a release layer selected from the group consisting of polyethylene layers, polypropylene layers, silicone-based layers, fluorocarbon-based layers, wax-based layers, urethane-based layers, long-chain alkyl acrylate-based layers, carbamate-based layers and combinations thereof.

5. The cold transfer postage stamp according to any preceding claim, wherein the pressure sensitive adhesive layer (4) is a (meth)acrylic adhesive layer comprising one or more polymers and/or copolymers derived from (meth)acrylic acid, ester, amide or nitrile derivatives thereof or is a rubber based adhesive layer comprising one or more elastomeric compounds selected from the group consisting of natural rubbers, nitrile rubbers, butadiene rubbers, isobutylene rubbers, isobutylene-isoprene rubbers, styrene-butadiene rubbers, styrene block copolymers, polysiloxane rubbers, ethylene-vinyl acetate copolymers, vinylether polymers and mixtures thereof.

6. The cold transfer postage stamp according to claim 5, wherein the pressure sensitive adhesive layer (4) further comprises one or more tackifiers selected from the group consisting of terpene resins, phenol resins, terpene-phenol resins, rosins, rosin esters, esters of hydrogenated rosins, synthetic hydrocarbon resins, coumarone-indene resins, low molecular weight polybutenes, tackifying silicone resins, and mixtures thereof.

7. A process for producing the cold transfer postage stamp recited in any one of claims 1 to 6 comprising the steps of:
i) providing a first release coated substrate (1),
ii) applying by a printing process one or more security inks so as to form one or more printed layers (2) comprising one or more security features (6),
iii) applying by a printing process a white ink so as to form a white opaque printed layer (3),
iv) applying a pressure sensitive adhesive layer (4), and
v) applying a second release coated substrate (5).

8. The process according to claim 7 further comprising a step of applying by a printing process one or more colored inks so as to form one or more printed color layers, said step being carried out before step ii), after step ii) or simultaneously with step ii).

9. The process according to claim 7 or 8, wherein the printing process of step ii) and/or the step of applying by a printing process one or more colored inks are independently selected from the group consisting of intaglio printing processes, offset printing processes, screen printing processes, rotogravure printing processes, flexography printing processes, inkjet printing processes and combinations thereof.

10. A method for preventing re-use of a postage stamp erroneously lacking a cancellation mark, said method comprising a step of a) removing the second release coated substrate (5) of the cold transfer postage stamp recited in any one of claims 1 to 6, b) applying at room temperature the cold transfer postage stamp to a mail piece (0) and c) removing the first release substrate (1) from the cold transfer postage stamp.

## Patentansprüche

1. Eine Kalttransfer-Briefmarke, die in der nachstehenden Reihenfolge aufweist:
a) ein erstes mit einer Trennschicht versehenes Substrat (1),
b) eine oder mehrere aufgedruckte Schichten (2), die durch ein Druckverfahren mit einer oder mehreren Sicherheitsdruckfarben gebildet sind und ein oder mehrere Sicherheitsmerkmale (6) aufweisen, die nach dem Entfernen des ersten mit einer Trennschicht versehenen Substrats (1) (a) der Umgebung zugewandt sind,
c) eine weiße, undurchsichtige, aufgedruckte Schicht (3), die aus einer weißen Druckfarbe gebildet ist,
d) eine druckempfindliche Klebeschicht (4), und
e) ein zweites mit einer Trennschicht versehenes Substrat (5).

2. Die Kalttransfer-Briefmarke nach Anspruch 1, wobei die ein oder mehreren Sicherheitsmerkmale (6) der aufgedruckten Schicht (2) b) aus der Gruppe ausgewählt sind, die aus Tiefdruckmustern, Zeichen aus einer oder mehreren Sicherheitsdruckfarben und Kombinationen davon besteht.

3. Die Kalttransfer-Briefmarke nach Anspruch 2, wobei die Tiefdruckmuster und/oder die eine oder mehrere Sicherheitsdruckfarben ein oder mehrere Sicherheitsmaterialien aufweisen, die aus der Gruppe bestehend aus optisch variablen Materialien, lumineszierenden Materialien, magnetischen Materialien, IRabsorbierenden Materialien und Kombinationen davon ausgewählt sind.

4. Die Kalttransfer-Briefmarke nach einem der vorhergehenden Ansprüche, wobei das erste mit einer Trennschicht versehene Substrat (1) und das zweite mit einer Trennschicht versehene Substrat (5) unabhängig voneinander aus einer Trennschicht hergestellt sind, die aus der Gruppe ausgewählt ist, die aus Polyethylenschichten, Polypropylenschichten, Schichten auf Silikonbasis, Schichten auf Fluorkohlenstoffbasis, Schichten auf Wachsbasis, Schichten auf Urethanbasis, Schichten auf Basis langkettiger Alkylacrylate, Schichten auf Carbamatbasis und Kombinationen davon besteht.

5. Die Kalttransfer-Briefmarke nach einem der vorhergehenden Ansprüche, wobei die druckempfindliche Klebeschicht (4) eine (Meth)acryl-Klebeschicht ist, die ein oder mehrere Polymere und/oder Copolymere aufweist, die von (Meth)acrylsäure, Ester, Amid- oder Nitrilderivaten davon abgeleitet sind, oder eine Klebeschicht auf Kautschukbasis ist, die eine oder mehrere elastomere Verbindungen aufweist, die aus der Gruppe ausgewählt sind, die aus Naturkautschuken, Nitrilkautschuken, Butadienkautschuken, Isobutylenkautschuken, Isobutylen-Isopren-Kautschuken, Styrol-Butadien-Kautschuken, Styrol-Block-Copolymeren, Polysiloxan-Kautschuken, Ethylen-Vinylacetat-Copolymeren, Vinylether-Polymeren und Mischungen davon besteht.

6. Die Kalttransfer-Briefmarke nach Anspruch 5, wobei die druckempfindliche Klebeschicht (4) ferner einen oder mehrere Klebrigmacher aufweist, die aus der Gruppe ausgewählt sind, die aus Terpenharzen, Phenolharzen, Terpen-PhenolHarzen, Kolophoniumharzen, Kolophoniumestern, Estern von hydrierten Kolophoniumharzen, synthetischen Kohlenwasserstoffharzen, Cumaron-Inden-Harzen, niedermolekularen Polybutenen, klebrigmachenden Silikonharzen und Mischungen davon besteht.

7. Ein Verfahren zur Herstellung der in einem der Ansprüche 1 bis 6 genannten Kalttransfer-Briefmarke, das die folgenden Schritte aufweist:
i) Bereitstellen eines ersten mit einer Trennschicht versehenen Substrats (1),
ii) Aufbringen einer oder mehrerer Sicherheitsdruckfarben durch ein Druckverfahren, um eine oder mehrere aufgedruckte Schichten (2) zu bilden, die ein oder mehrere Sicherheitsmerkmale (6) aufweisen,
iii) Auftragen einer weißen Druckfarbe durch ein Druckverfahren, um eine weiße, undurchsichtige aufgedruckte Schicht (3) zu bilden,
iv) Auftragen einer druckempfindlichen Klebeschicht (4) und
v) Auftragen eines zweiten mit einer Trennschicht versehenen Substrats (5).

8. Das Verfahren nach Anspruch 7, das ferner einen Schritt des Auftragens einer oder mehrerer farbiger Druckfarben durch ein Druckverfahren aufweist, damit eine oder mehrere aufgedruckte Farbschichten gebildet werden, wobei dieser Schritt vor Schritt ii), nach Schritt ii) oder gleichzeitig mit Schritt ii) durchgeführt wird.

9. Das Verfahren nach Anspruch 7 oder 8, wobei das Druckverfahren von Schritt ii) und/oder der Schritt des Auftragens einer oder mehrerer farbiger Druckfarben durch ein Druckverfahren unabhängig voneinander aus der Gruppe bestehend aus Tiefdruckverfahren, Offsetdruckverfahren, Siebdruckverfahren, Rotationstiefdruckverfahren, Flexodruckverfahren, Tintenstrahldruckverfahren und Kombinationen davon ausgewählt sind.

10. Ein Verfahren zum Verhindern der Wiederverwendung einer Briefmarke, der irrtümlich ein Entwertungszeichen fehlt, wobei das Verfahren einen Schritt aufweist, bei dem a) das zweite mit einer Trennschicht versehene Substrat (5) der in einem der Ansprüche 1 bis 6 genannten Kalttransfer-Briefmarke entfernt wird, b) die Kalttransfer-Briefmarke bei Raumtemperatur auf ein Poststück (0) aufgetragen wird und c) das erste mit einer Trennschicht versehene Substrat (1) von der Kalttransfer-Briefmarke entfernt wird.

## Revendications

1. Timbre d'affranchissement à transfert à froid comprenant dans l'ordre suivant :
a) un premier substrat revêtu antiadhésif (1),
b) une ou plusieurs couches imprimées (2) formées par un processus d'impression avec une ou plusieurs encres de sécurité et comprenant une ou plusieurs particularités de sécurité (6), qui sont face à l'environnement après enlèvement du premier substrat revêtu antiadhésif (1) (a),
c) une couche imprimée opaque blanche (3) formée à partir d'une encre blanche,
d) une couche adhésive sensible à la pression (4), et
e) un second substrat revêtu antiadhésif (5).

2. Timbre d'affranchissement à transfert à froid selon la revendication 1, dans lequel les une ou plusieurs particularités de sécurité (6) de la couche imprimée (2) b) sont choisies dans le groupe constitué de motifs imprimés en creux, d'inscriptions faites d'une ou de plusieurs encres de sécurité et de combinaisons de ceux-ci.

3. Timbre d'affranchissement à transfert à froid selon la revendication 2, dans lequel les motifs imprimés en creux et/ou les une ou plusieurs encres de sécurité comprennent un ou plusieurs matériaux de sécurité choisis dans le groupe constitué de matériaux à effet optique variable, de matériaux luminescents, de matériaux magnétiques, de matériaux d'absorption d'infrarouge et de combinaisons de ceux-ci.

4. Timbre d'affranchissement à transfert à froid selon l'une quelconque des revendications précédentes, dans lequel le premier substrat revêtu antiadhésif (1) et le second substrat revêtu antiadhésif (5) sont préparés indépendamment à partir d'une couche anti-adhésive choisie dans le groupe constitué de couches de polyéthylène, de couches de polypropylène, de couches à base de silicone, de couches à base de fluorocarbone, de couches à base de cire, de couches à base d'uréthane, de couches à base d'acrylate d'alkyle à chaîne longue, de couches à base de carbamate et de combinaisons de celles-ci.

5. Timbre d'affranchissement à transfert à froid selon l'une quelconque des revendications précédentes, dans lequel la couche adhésive sensible à la pression (4) est une couche adhésive (méth)acrylique comprenant un ou plusieurs polymères et/ou copolymères dérivés d'acide (méth)acrylique, d'ester, de dérivés amide ou nitrile de ceux-ci ou est une couche adhésive à base de caoutchouc comprenant un ou plusieurs composés élastomériques choisis dans le groupe constitué de caoutchoucs naturels, de caoutchoucs nitrile, de caoutchoucs butadiène, de caoutchoucs isobutylène, de caoutchoucs isobutylène-isoprène, de caoutchoucs styrène-butadiène, de copolymères séquencés de styrène, de caoutchoucs polysiloxane, de copolymères d'éthylène-acétate de vinyle, de polymères d'éther vinylique et de mélanges de ceux-ci.

6. Timbre d'affranchissement à transfert à froid selon la revendication 5, dans lequel la couche adhésive sensible à la pression (4) comprend en outre un ou plusieurs agents poisseux choisis dans le groupe constitué de résines terpéniques, de résines phénoliques, de résines terpéne-phénoliques, de colophanes, de colophanes estérifiées, d'esters de colophanes hydrogénées, de résines hydrocarbonées synthétiques, de résines de coumarone-indène, de polybutènes de faible poids moléculaire, de résines de silicone donnant du collant et de mélanges de ceux-ci.

7. Procédé pour produire le timbre d'affranchissement à transfert à froid décrit à l'une quelconque des revendications 1 à 6 comprenant les étapes de :
i) fourniture d'un premier substrat revêtu antiadhésif (1),
ii) application par un processus d'impression d'une ou de plusieurs encres de sécurité de façon à former une ou plusieurs couches imprimées (2) comprenant une ou plusieurs particularités de sécurité (6),
iii) application par un processus d'impression d'une encre blanche de façon à former une couche imprimée opaque blanche (3),
iv) application d'une couche adhésive sensible à la pression (4), et
v) application d'un second substrat revêtu antiadhésif (5).

8. Procédé selon la revendication 7 comprenant en outre une étape d'application par un processus d'impression d'une ou de plusieurs encres colorées de façon à former une ou plusieurs couches en couleurs imprimées, ladite étape étant réalisée avant l'étape ii), après l'étape ii) ou simultanément à l'étape ii).

9. Procédé selon la revendication 7 ou 8, dans lequel le processus d'impression de l'étape ii) et/ou l'étape d'application par un processus d'impression d'une ou de plusieurs encres colorées sont choisis indépendamment dans le groupe constitué de processus d'impression en creux, de processus d'impression offset, de processus d'impression en sérigraphie, de processus d'impression par héliogravure, de processus d'impression flexographique, de processus d'impression à jet d'encre et de combinaisons de ceux-ci.

10. Procédé pour empêcher la réutilisation d'un timbre d'affranchissement auquel il manque par erreur une oblitération, ledit procédé comprenant une étape a) d'enlèvement du second substrat revêtu antiadhésif (5) du timbre d'affranchissement à transfert à froid décrit à l'une quelconque des revendications 1 à 6, b) d'application à température ambiante du timbre d'affranchissement à transfert à froid sur un objet de correspondance (0) et c) d'enlèvement du premier substrat antiadhésif (1) du timbre d'affranchissement à transfert à froid.
